# EUROPÄISCHE PATENTSCHRIFT

(11) **EP 2 200 856 B1**
(45) Veröffentlichungstag und Bekanntmachung des Hinweises auf die Patenterteilung: **29.02.2012**
(21) Anmeldenummer: 08803819.5
(22) Anmeldetag: 08.09.2008
(51) Int. Cl.: G01P 1/08, G01D 11/28, G01D 7/04, B60K 37/02, B60K 35/00

(54) **KOMBINATIONSINSTRUMENT ZUR ANZEIGE VON BETRIEBSZUSTÄNDEN**
COMBINATION INSTRUMENT FOR DISPLAYING OPERATING STATES
INSTRUMENT COMBINÉ D'AFFICHAGE D'ÉTATS DE FONCTIONNEMENT

(30) Priorität: 11.09.2007 DE 102007043207
(43) Veröffentlichungstag der Anmeldung: 30.06.2010
(73) Patentinhaber: Continental Automotive GmbH, 30165 Hannover (DE)
(72) Erfinder: HABENEY, Andreas, 65835 Liederbach (DE)
(86) Internationale Anmeldenummer: PCT/EP2008/061850
(87) Internationale Veröffentlichungsnummer: WO 2009/034052

(56) Entgegenhaltungen:
- DE-A1- 4 023 798
- US-A- 3 270 201
- US-A1- 2007 064 322

## Beschreibung

Die Anzeige betrifft ein Kombinationsinstrument zur Anzeige von Betriebszuständen. Aus dem Stand der Technik ist es bekannt, derartige Anzeigen vorzusehen, bei denen mehrere Anzeigen mittels eines einzigen Instrumentes darstellbar sind. So ist es beispielsweise bekannt, einen Tachometer zur Anzeige der aktuellen Fahrgeschwindigkeit eines Kraftfahrzeuges zu verwenden, bei dem zusätzliche Anzeigen wie beispielsweise ein Tageskilometerzähler, ein Kilometerzähler oder Hinweissymbole in Form von Piktogrammen für bestimmte Betriebszustände, wie beispielsweise die Funktion einer Blinkvorrichtung, ein Hinweis auf den Betrieb .einer sonstigen Beleuchtungsvorrichtung, ein Hinweis auf fehlerhaft Zustände sonstiger Kraftfahrzeugbauteile wie beispielsweise Bremsen, Airbags, Lichtmaschinen oder Kühlvorrichtungen. Diese Hinweise sind teilweise nur schlecht wahrnehmbar. Die DE 40 23 798 A1 beschreibt ein Kombinationsinstrument mit den Merkmalen des Oberbegriffs des Anspruchs 1. Aufgabe der Erfindung ist es daher, ein Kombinationsinstrument anzugeben, bei dem mindestens ein derartiges Hinweiselement besser wahrnehmbar ist. Diese Aufgabe wird durch ein Kombinationsinstrument mit den Merkmalen des Anspruchs 1 gelöst.

Erfindungsgemäß weist das Kombinationsinstrument eine erste Darstellungsebene mit einem Zifferblatt und/oder Anzeigesymbolen auf, wobei die dreidimensionale Nachbildung des Gegenstandes aus Blickrichtung eines Beobachters des Kombinationsinstrumentes zumindest teilweise vor der ersten Darstellungsebene angeordnet ist und sich zwischen der ersten Darstellungsebene und der dreidimensionalen Darstellung des Gegenstandes ein aus Blickrichtung eines Beobachters liegender Zwischenraum befindet. Hierdurch wird die Wahrnehmbarkeit der dreidimensionalen Nachbildung des Gegenstandes erhöht. Durch diesen zwischen der Nachbildung und der ersten Darstellungsebene liegenden Zwischenraum wird erreicht, dass sich ein sichtbarer Spalt zwischen der ersten Darstellungsebene und der dreidimensionalen Nachbildung befindet und so die dreidimensionale Nachbildung weiter von der ersten Darstellungsebene entfernt ist und so besser unterscheidbar und wahrnehmbar ist.

Beispielsweise symbolisiert die dreidimensionale Darstellung einer Kraftstoffzapfsäule, dass der Kraftstoffvorrat im Tank des Kraftfahrzeuges zur Neige geht und weist den Kraftfahrer darauf hin, dass er den Kraftstoffvorrat des Kraftfahrzeuges auffüllen sollte, damit er nicht liegen bleibt und so eine Komforteinbuße erleidet oder sogar in eine gefährliche Situation gerät, wenn er beispielsweise auf einer Autobahn liegen bleiben sollte.

Wenn die dreidimensionale Nachbildung des Gegenstandes mittels einer Beleuchtungseinrichtung mehrfarbig beleuchtbar ist, können mehrere Zustände des zu überwachenden Betriebszustandes dargestellt werden, beispielsweise kann eine grün beleuchtete Kraftstoffzapfsäule darauf hinweisen, dass noch ein großer Kraftstoffvorrat vorhanden ist und eine rot beleuchtete Kraftstoffzapfsäule, dass der Tankvorrat erneuert werden sollte. Besonders energiesparend und dauerhaft ist die Beleuchtungsvorrichtung, wenn sie mindestens eine Leuchtdiode aufweist. Wenn die Beleuchtungsvorrichtung aus einer roten, grünen und blauen Leuchtdiode besteht, kann die Nachbildung in allen vorhanden Farben durch eine Mischung der vorhandenen Farben beleuchtet werden. Besonders einfach ist der Aufbau, wenn man eine RGB-Leuchtdiode verwendet, in der rote, grüne und blaue Leuchtdioden integriert sind. Durch die Mehrfarbigkeit kann eine nahezu quasi analoge Anzeige realisiert werden. So kann beispielsweise eine grüne Kraftstoffzapfsäule symbolisieren, dass der Kraftstofftank voll oder nahezu voll ist, dann bei nachlassendem Kraftstoffvorrat beispielsweise zu einer blauen Farbe übergehen und vor einem roten Zustand noch einen gelben Zustand einnehmen, bevor dann schließlich eine rote Anzeige den Kraftfahrer darauf hinweist, dass demnächst getankt werden sollte. Wenn sich der Kraftstoffvorrat auf eine besonders niedrige Menge reduziert hat, kann beispielsweise dann die Nachbildung des Gegenstandes in roter Farbe mit Unterbrechungen beleuchtet werden, so dass ein Blinken erscheint. Es ist beispielsweise auch möglich, dieses Blinken nicht nur durch ein Ein- und Ausschalten der roten Farbe zu realisieren, sondern beispielsweise auch abwechselnd in Rot und Gelb oder Rot und Blau zu beleuchten, wobei vorteilhafterweise die Zeit, in der die Nachbildung rot beleuchtet ist, länger ist, als die Beleuchtungszeit in der anderen Farbe. Als Nachbildungen kommen beispielsweise die bereits vorgenannte Kraftstoffzapfsäule, aber auch ein Thermometer, eine symbolisierte Bremse, ein Scheinwerfer, eine Ölkanne oder ein Reifenquerschnitt in Betracht. Hierbei symbolisiert das Thermometer die Temperaturen von Betriebsmitteln des Motors, beispielsweise die des Motoröls oder des Motorkühlwassers. Eine symbolisierte Bremse weist auf mögliche Bremsdefekte hin, wobei beispielsweise eine rot beleuchtete Bremse einen absoluten Defekt darstellt und eine gelb beleuchtete Bremse einen Hinweis darauf, dass möglichst bald die Wartung der Bremse erfolgen sollte, beispielsweise dass Bremsbeläge ausgewechselt werden sollten. Ein Scheinwerfer symbolisiert die Funktion eines Scheinwerfers, wobei mittels einer einzigen Nachbildung eines Scheinwerfers beispielsweise bei blauer Beleuchtung die Funktion des Fernscheinwerfers und bei grüner Beleuchtung die Funktion der Nebelschlussleuchte dargestellt wird. Eine Ölkanne kann ein Hinweis auf einen Öldruck oder Ölvorrat des Motors sein, beispielsweise kann eine gelb beleuchtete Ölkanne den Kraftfahrer darauf hinweisen, den Motorölvorrat nachzufüllen und eine rot beleuchtete Ölkanne den Kraftfahrer darauf hinweisen, dass der Motoröldruck so gering ist, dass der Betrieb des Motors umgehend beendet werden sollte. Ein Reifenquerschnitt kann einen Luftdruck in den Reifen des Kraftwagens darstellen, beispielsweise ein rot beleuchteter Reifen, dass der Luftdruck zu niedrig ist und ein grün beleuchteter Reifen, dass der Luftdruck der Reifen korrekt ist.

Die Erfindung wird nachfolgend anhand der Figuren näher erläutert. Es zeigen
- Fig. 1: eine erste Abbildung eines Ausführungsbeispieles eines erfindungsgemäßen Kombinationsinstrumentes,
- Fig. 2: einen Schnitt durch das Kombinationsinstrument aus Fig. 1,
- Fig. 3: die Aufsicht auf ein zweites Ausführungsbeispiel des erfindungsgemäßen Kombinationsinstruments,
- Fig. 4: den Schnitt durch das Kombinationsinstrument aus Fig. 3 und
- Fig. 5: die Ansicht eines weiteren Ausführungsbeispiels der Erfindung.

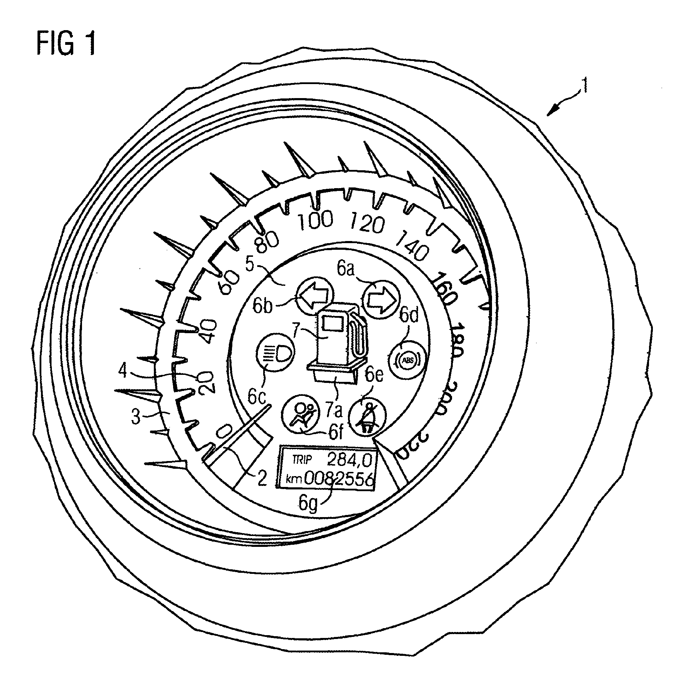

Fig. 1 zeigt ein Kombinationsinstrument 1 mit einer Zeigerspitze 2, einer Skala 3, Skalenzahlen 4, eine erste Darstellungsebene 5 mit Anzeigesymbolen 6a bis 6f und einem Kilometerzähler 6g, eine dreidimensionale Nachbildung 7 eines Gegenstandes mit einem Sockel 7a und eine zweite Darstellungsebene 8. Die Skala 3 mit den Skalenzahlen 4 ist in der zweiten Anzeigenebene dadurch realisiert, dass sie auf einen transparenten Teilring aufgedruckt ist, so dass sich die Skala 3 mit den Skalenzahlen 4 aus Blickrichtung eines Beobachters vor der Zeigerspitze 2 befindet. Es ist natürlich auch möglich, die Skala und die Skalenzahlen in der ersten Darstellungsebene 5 anzuordnen und so auf die zweite Darstellungsebene 8 zu verzichten. Die dreidimensionale Nachbildung 7 des Gegenstandes, hier eine Kraftstoffzapfsäule, ist auf dem Sockel 7a angeordnet und ragt von der ersten Darstellungsebene 5 weg, so dass sich ein Zwischenraum zwischen der ersten Darstellungsebene 5 und der dreidimensionalen Nachbildung 7 befindet. Hierdurch wird die Wahrnehmbarkeit der dreidimensionalen Nachbildung 7 wesentlich erhöht. Die dreidimensionale Nachbildung 7 ist beispielsweise mittels einer RGB-LED in mehreren Farben beleuchtbar und so beispielsweise bei einem vollen Kraftstoffbehälter grün beleuchtbar, bei einem zu 2/3 beleuchteten Kraftstoffbehälter blau, bei einem zu 1/3 beleuchteten Kraftstoffbehälter gelb, bei einem nur noch vorhanden Reservevorrat rot. Somit erhält der Kraftfahrer schnell einen Eindruck über die noch vorhandene Kraftstoffmenge.

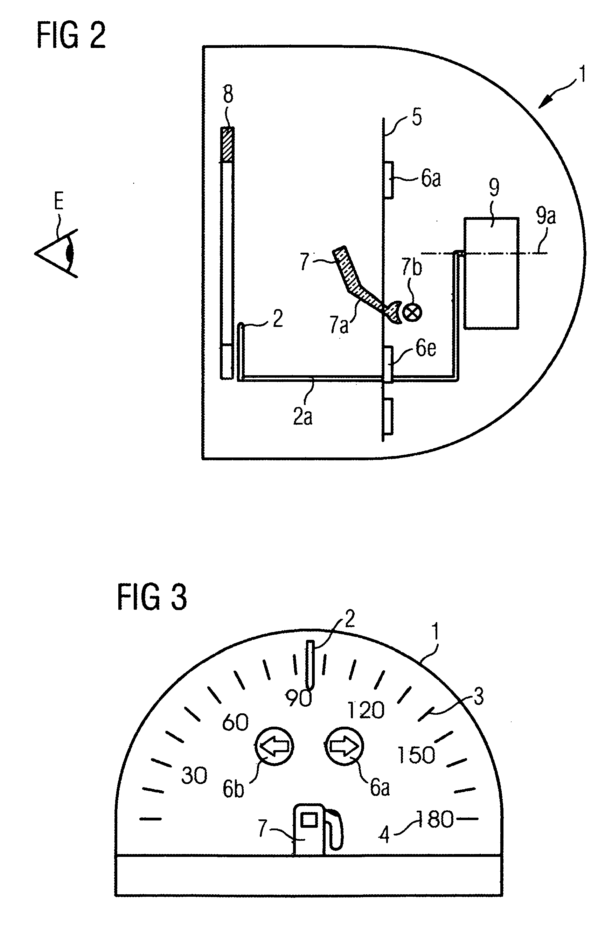

In Fig. 2 sind zusätzlich zu dem in Fig. 1 angezeigten Bauteilen noch ein Zeiger 2a, eine Beleuchtungsvorrichtung 7b und ein Messwerk 9 wahrnehmbar. Die Beleuchtungsvorrichtung 7b sendet ihr Licht durch den Sockel 7a in die dreidimensionale Nachbildung 7. Dadurch leuchtet die dreidimensionale Nachbildung 7. Weiterhin ist zu erkennen, dass die dreidimensionale Nachbildung 7 von der ersten Darstellungsebene 5 entfernt angeordnet ist. Der Zeiger 2a wird vom Messwerk 9 angetrieben und trägt die Zeigerspitze 2. Er ist um die Messwerkachse 9a drehbar. So ist mittels einer entsprechenden Drehung des Zeigers 2a mit der Zeigerspitze 2 die aktuell gefahrene Geschwindigkeit des Kraftfahrzeuges auf der Skala 3 mit den Skalenzahlen 4 ablesbar. Der Sockel 7a ist vorteilhafterweise derart ausgestaltet, dass er in seinem Kern lichtleitend ist und an seiner Außenfläche opak, so dass er nur Licht leitet, selbst aber kein Licht an die Umgebung abgibt.

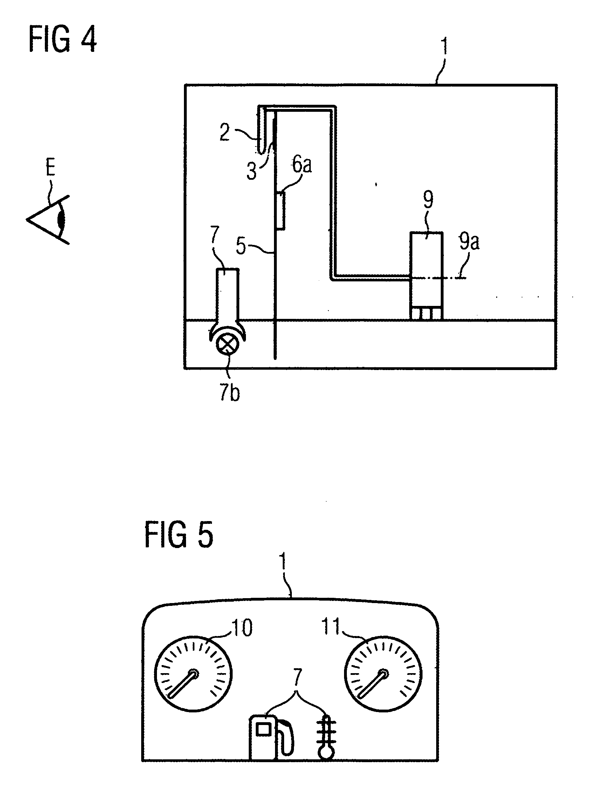

In Fig. 3 weist ein weiteres Ausführungsbeispiel eines Kombinationsinstrumentes 1 wiederum eine Skala 3 mit Skalenzahlen 4, Anzeigesymbolen 6a, 6b und eine dreidimensionale Nachbildung 7 eines Gegenstandes auf. Im Gegensatz zu der im Ausführungsbeispiel in Figuren 1 und 2 ist im zweiten Ausführungsbeispiel der Figuren 3 und 4 die dreidimensionale Nachbildung 7 eines Gegenstandes vollständig vor der ersten Darstellungsebene 5 angeordnet, so dass der zwischen der ersten Darstellungsebene 5 und der dreidimensionalen Nachbildung 7 vorhandene Zwischenraum noch besser wahrnehmbar ist und die dreidimensionale Nachbildung 7 so noch besser wahrnehmbar ist.

In Fig. 4 ist zusätzlich noch ein Auge E eines Beobachters dargstellt. Ein weiterer Unterschied zum ersten Ausführungsbeispiel besteht darin, dass die Skala 3 und die Skalenzahlen 4 in der ersten Darstellungsebene 5 angeordnet sind, so dass sich der bauliche Aufwand für das Kombinationsinstrument verringert.

Fig. 5 zeigt schließlich ein Kombinationsinstrument mit zwei Analoganzeigen in Form eines Tachometers 10 und eines Drehzahlmessers 11, zwischen denen dreidimensionale Nachbildungen 7 in Form einmal einer Kraftstoffzapfsäule und einmal in Form eines Thermometers dargestellt sind. Der Thermometer kann beispielsweise auf eine korrekte oder unkorrekte Betriebstemperatur des Kraftfahrzeugmotors hinweisen. Beispielsweise ist es hier möglich, einen kalten Motor durch ein blau beleuchtetes Thermometer zu kennzeichnen, einen Motor mit optimaler Betriebstemperatur durch eine grüne Beleuchtung des Thermometers darzustellen und einen überhitzen Motor durch ein rot beleuchtetes Thermometer darzustellen. So erhält der Kraftfahrer einfach einen Hinweis auf den Betriebszustand, er wird zum einen davor gewarnt, einen kalten Motor unnötig zu belasten und bei einem überhitzen Motor angeregt, entsprechende Gegenmaßnahmen einzuleiten.

## Patentansprüche

1. Kombinationsinstrument (1) zur Anzeige von Betriebszuständen eines Kraftfahrzeugs, wobei das Kombinationsinstrument (1) eine dreidimensionale Nachbildung (7) eines Gegenstandes aufweist, die einen Betriebszustand des Kraftfahrzeugs symbolisiert, wobei die dreidimensionale Nachbildung (7) des Gegenstandes zumindest teilweise transluzent ausgestaltet ist, und wobei die dreidimensionale Nachbildung (7) des Gegenstandes mittels einer Beleuchtungsvorrichtung (7b) beleuchtbar ausgestaltet ist, **dadurch gekennzeichnet, dass** das Kombinationsinstrument eine erste Anzeigeebene 5 mit Skalen (3) und/oder Anzeigesymbolen (6a-6f) aufweist, dass die dreidimensionale Nachbildung (7) des Gegenstandes aus Blickrichtung eines Beobachters (E) des Kombinationsinstruments (1) zumindest teilweise derart vor der ersten Darstellungsebene 5 angeordnet ist, dass sich zwischen der ersten Darstellungsebene (5) und der dreidimensionalen Nachbildung (7) des Gegenstandes ein Zwischenraum befindet.

2. Kombinationsinstrument nach Anspruch 1, **dadurch gekennzeichnet, dass** die dreidimensionale Nachbildung (7) des Gegenstandes mittels der Beleuchtungsvorrichtung (7b) mehrfarbig beleuchtbar ist.

3. Kombinationsinstrument nach einem der vorstehenden Ansprüche, **dadurch gekennzeichnet, dass** die Beleuchtungsvorrichtung mindestens eine Leuchtdiode aufweist.

4. Kombinationsinstrument nach Anspruch 3, **dadurch gekennzeichnet, dass** die Beleuchtungsvorrichtung (7) eine rote, blaue und grüne Leuchtdiode aufweist.

5. Kombinationsinstrument nach Anspruch 4, **dadurch gekennzeichnet, dass** die Beleuchtungsvorrichtung (7) eine RGB-Leuchtdiode aufweist.

6. Kombinationsinstrument nach einem der Ansprüche 2 bis 5, **dadurch gekennzeichnet, dass** die Beleuchtungsvorrichtung (7b) die dreidimensionale Nachbildung (7) eines Gegenstandes je nach anzuzeigendem Betriebszustand verschiedenfarbig beleuchtet.

7. Kombinationsinstrument nach einem der vorstehenden Ansprüche, **dadurch gekennzeichnet, dass** bei besonders hervorzuhebenden Betriebszuständen die Beleuchtungsvorrichtung (7b) die Nachbildung (7) des Gegenstandes mit Unterbrechungen beleuchtet.

8. Kombinationsinstrument nach einem der vorstehenden Ansprüche, **dadurch gekennzeichnet, dass** die dreidimensionale Nachbildung (7) des Gegenstandes beispielsweise eine Kraftstoffzapfsäule, ein Thermometer, eine symbolisierte Bremse, einen Scheinwerfer, eine Ölkanne oder einen Reifenquerschnitt darstellt.

## Claims

1. Combination instrument (1) for displaying operating states of a motor vehicle, the combination instrument (1) having a three-dimensional simulation (7) of an object which symbolizes an operating state of the motor vehicle, the three-dimensional simulation (7) of the object being designed to be at least partially translucent, and the three-dimensional simulation (7) of the object being designed such that it can be illuminated by means of an illumination device (7b), **characterized in that** the combination instrument has a first display plane (5) with scales (3) and/or display symbols (6a-6f), and **in that** from the direction of view of an observer (E) of the combination instrument (1) the three-dimensional simulation (7) of the object is arranged at least partially in front of the first display plane (5) in such a way that an interspace is located between the first display plane (5) and the three-dimensional simulation (7) of the object.

2. Combination instrument according to Claim 1, **characterized in that** the three-dimensional simulation (7) of the object can be illuminated in a plurality of colors by means of the illumination device (7b).

3. Combination instrument according to one of the preceding claims, **characterized in that** the illumination device has at least one light-emitting diode.

4. Combination instrument according to Claim 3, **characterized in that** the illumination device (7) has a red, blue and green light-emitting diode.

5. Combination instrument according to Claim 4, **characterized in that** the illumination device (7) has an RGB light-emitting diode.

6. Combination instrument according to one of Claims 2 to 5, **characterized in that** the illumination device (7b) illuminates the three-dimensional simulation (7) of an object in different colors depending on the operating state to be displayed.

7. Combination instrument according to one of the preceding claims, **characterized in that** the illumination device (7b) illuminates the simulation (7) of the object with interruptions in the case of operating states to be particularly highlighted.

8. Combination instrument according to one of the preceding claims, **characterized in that**, by way of example, the three-dimensional simulation (7) of the object displays a gasoline pump, a thermometer, a symbolized brake, a headlamp, an oil can or a tire cross section.

## Revendications

1. Instrument (1) combiné pour l'affichage d'états de fonctionnement d'un véhicule automobile, l'instrument (1) combiné comportant une reproduction (7) en trois dimensions d'un objet qui symbolise un état de fonctionnement du véhicule automobile, la reproduction (7) en trois dimensions de l'objet étant translucide, au moins en partie, et la reproduction (7) en trois dimensions de l'objet pouvant être éclairée au moyen d'un dispositif (7b) d'éclairage, **caractérisé en ce que** l'instrument combiné comporte un premier plan (5) d'affichage ayant des graduations (3) et/ou des symboles (6a à 6f) d'affichage, **en ce que** la reproduction (7) en trois dimensions de l'objet est disposée, dans la direction dans laquelle regarde un observateur (E) de l'instrument (1) combiné, au moins en partie, devant le premier plan (5) de représentation, de manière à ce qu'il y ait un espace intermédiaire entre le premier plan (5) de représentation et la reproduction (7) en trois dimensions de l'objet.

2. Instrument combiné suivant la revendication 1, **caractérisé en ce que** la reproduction (7) en trois dimensions de l'objet peut être éclairée en plusieurs couleurs au moyen du dispositif (7b) d'éclairage.

3. Instrument combiné suivant l'une des revendications précédentes, **caractérisé en ce que** le dispositif d'éclairage comporte au moins une diode électroluminescente.

4. Instrument combiné suivant la revendication 3, **caractérisé en ce que** le dispositif (7) d'éclairage comporte une diode électroluminescente rouge, bleue et verte.

5. Instrument combiné suivant la revendication 4, **caractérisé en ce que** le dispositif (7) d'éclairage comporte une diode électroluminescente rouge, verte et bleue.

6. Instrument combiné suivant l'une des revendications 2 à 5, **caractérisé en ce que** le dispositif (7b) d'éclairage éclaire la reproduction (7) en trois dimensions d'un objet en une couleur différente suivant l'état de fonctionnement à afficher.

7. Instrument combiné suivant l'une des revendications précédentes, **caractérisé en ce que**, pour des états de fonctionnement à mettre particulièrement en évidence, le dispositif (7b) d'éclairage éclaire avec des interruptions la reproduction (7) de l'objet.

8. Instrument combiné suivant l'une des revendications précédentes, **caractérisé en ce que** la reproduction (7) en trois dimensions de l'objet représente, par exemple, un poste à carburant, un thermomètre, un frein symbolisé, un phare, une burette d'huile ou une section de pneumatique.
